# EUROPÄISCHE PATENTSCHRIFT

(11) **EP 2 754 939 B1**
(45) Veröffentlichungstag und Bekanntmachung des Hinweises auf die Patenterteilung: **10.01.2018**
(21) Anmeldenummer: 13194490.2
(22) Anmeldetag: 26.11.2013
(51) Int. Cl.: F16L 23/028

(54) **SAE-Kopfarmatur für Höchstdruckschläuche**
SAE head fitting for high pressure hoses
Armature de tête SAE pour tuyaux à très haute pression

(30) Priorität: 14.01.2013 DE 202013100176 U
(43) Veröffentlichungstag der Anmeldung: 16.07.2014
(73) Patentinhaber: Dipl.-Ing. H. Schulz HDS Hydraulik GmbH & Co. KG, 51647 Gummersbach (DE)
(72) Erfinder: Siemens, Kornelius, 51647 Gummersbach (DE)
(74) Vertreter: Patent- und Rechtsanwälte Dr. Solf & Zapf

(56) Entgegenhaltungen:
- EP-A2- 0 899 496
- US-A- 4 874 190
- "J516_OCT2011 Hydraulic Hose Fittings", 30. Juni 1993 (1993-06-30), SAE SURFACE VEHICLE STANDARD, SOCIETY OF AUTOMOTIVE ENGINEERS, PAGE(S) 1 - 13, XP009177550, * Seite 17 *
- "J518_199306 Hydraulic flanged tube, pipe, and hose connections, four-bolt split flange type ED - SOCIETY OF AUTOMOTIVE ENGINEERS", SAE SURFACE VEHICLE STANDARD, SOCIETY OF AUTOMOTIVE ENGINEERS, Bd. J518, 30. Juni 1993 (1993-06-30), Seiten 1-13, XP009157798,
- "Hose, Fittings and Equipment. Catalog 4400", 31. Oktober 2011 (2011-10-31), Parker Hannifin Corporation, XP002723172, * B-3, B-75, D-13 *

## Beschreibung

Die vorliegende Erfindung betrifft eine Vorrichtung gemäß dem Oberbegriff des Anspruchs 1. Eine derartige SAE-Kopfarmatur zum Anschluss an eine gattungsgemäße SAE-Armatur ist aus der EP 0 899 496 B1 bekannt. Da sich beispielsweise bei Baumaschinen oder dergleichen, bei denen die gattungsgemäße Armatur zum Einsatz kommt, die Tendenz zu erhöhten Betriebsdrücken zur Leistungssteigerung abzeichnet, liegt der vorliegenden Erfindung die Aufgabe zu Grunde, die gattungsgemäße Armatur derart zu modifizieren, dass die Leistungsverluste verringert werden und hierdurch erhöhte Betriebsdrücke ermöglicht werden, ohne jedoch die an den anzuschließenden Maschinen oder dergleichen befindlichen Abmessungen der einteiligen SAE-Armaturen zu ändern. Diese Aufgabe wird durch eine Vorrichtung nach Anspruch 1 gelöst. Dabei ist der Öffnungsdurchmesser (d₂) dem Fludkanaldurchmesser (d₁) gemäß folgender Tabelle zugeordnet:

| d₂ [mm] | d₁ [mm] |
|---|---|
| 30 entsprechend der NW 32 | 28 entsprechend der NW 36 |
| 38 entsprechend der NW 40 | 36 entsprechend der NW 45 |
| 50 entsprechend der NW 50 | 46 entsprechend der NW 57 |

Die Erfindung ermöglicht es, an Stelle der Nennweiten NW 32, NW 40 und NW 50, wobei unter "NW" der Innendurchmesser eines mit dem Rohrstutzen anzuschließenden Fluidschlauches verstanden wird, Schlauchnennweiten von NW 36, NW 45 und NW 57 zu ermöglichen, ohne dass die Anschlussmaße für die einteilige SAE-Armatur, die zu den Nennweiten NW 32, 40 und 50 gehören, im Bereich der Stirnfläche des Vollflansches bzw. des Ringbundes zu verändern, einschließlich des SAE-Lochbildes für die Anschlussschraubbolzen. Dabei beruht die Erfindung auf der Erkenntnis, dass die Ausbildung des kegelstumpfförmigen Anschlusskopfes, insbesondere mit dem die Anschlagbegrenzung bildenden Ringbund es ermöglicht, ohne dass es zu Festigkeitsverlusten und Dichtheitsproblemen kommt, eine Vergrößerung des Durchmessers des Fluidkanals vorzunehmen. Die Erfindung besitzt somit die Möglichkeit, ohne Veränderung der Anschlussmaße für die jeweilige SAE-Anschlussarmatur mit den Öffnungsdurchmessern 30 mm, 38 mm oder 50 mm jeweils eine SAE-Kopfarmatur zur Verfügung zu stellen, die höhere zulässige Betriebsdrücke bietet, als diejenigen Armaturen mit der nächsthöheren Nennweite im Vergleich zu NW 32, NW 40 und NW 50.

Vorteilhafte Ausführungen der Erfindung sind in den Unteransprüchen enthalten.

Anhand der in den beiliegenden Zeichnungen dargestellten Ausführungsbeispiele wird die Erfindung näher erläutert.

Es zeigen:
- Fig. 1a: eine Prinzipansicht im Schnitt einer bekannten SAE-Anschlussarmatur der Nennweite NW 32 bzw. DN 32, in Verbindung mit der zugehörigen SAE-Anschlussarmatur für 1 ¼ Zoll,
- Fig. 1b: eine Prinzipansicht im Schnitt einer erfindungsgemäßen Schlaucharmatur NW 36 bzw. DN 36 bzw. 1 ⅜ Zoll zum Anschluss an eine Anschlussarmatur gemäß Fig.1a,
- Fig. 2: eine Prinzipansicht im Schnitt einer erfindungsgemäßen Schlaucharmatur der Nennweite NW 45 bzw. DN 45 bzw. 1 ³/₄ Zoll zum Anschluss an eine Anschlussarmatur für die Nennweite NW 40 bzw. DN 40 und
- Fig. 3: eine Prinzipansicht eines Längsschnittes einer erfindungsgemäßen Schlaucharmatur NW 57 bzw. DN 57 bzw. 2 ¼ zoll zum Anschluss an eine Anschlussarmatur für eine Schlaucharmatur der Nennweite NW 50 bzw. DN 50.

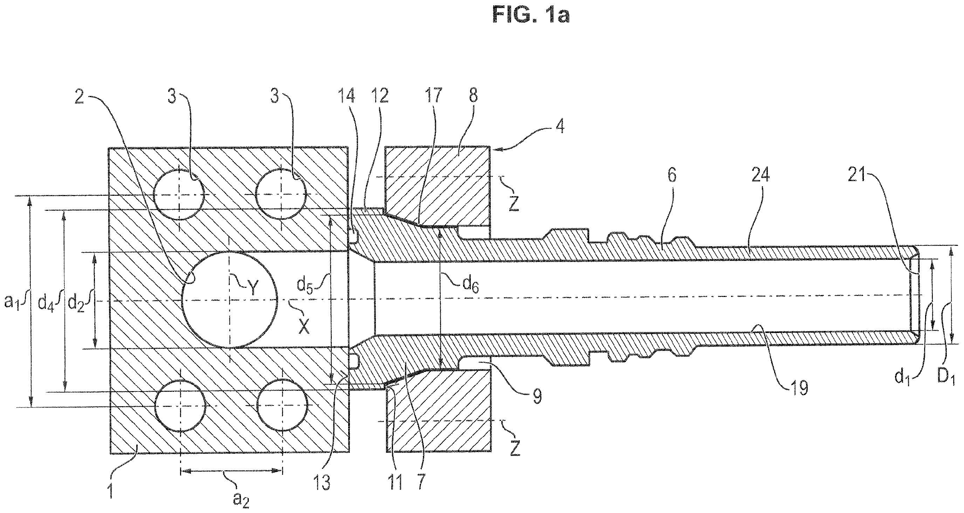

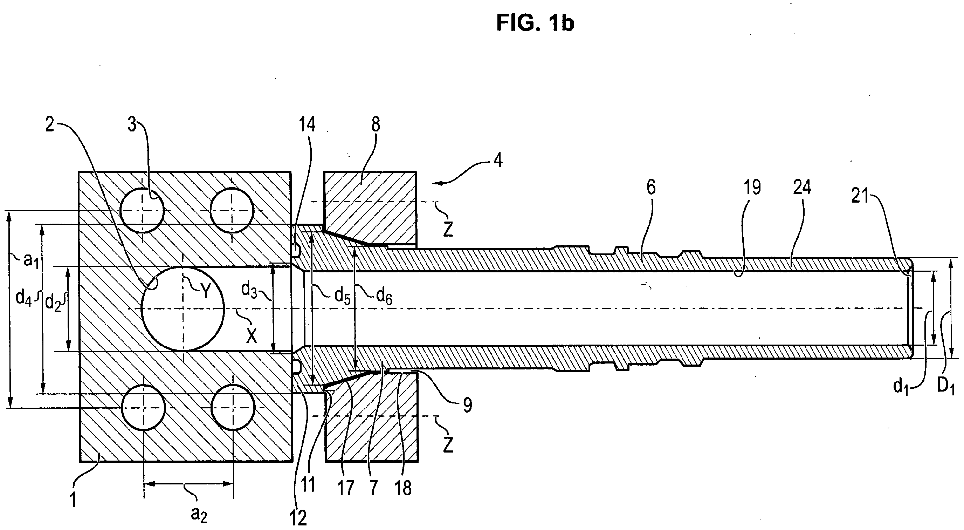

In den Fig. 1 bis 3 sind gleiche Teile bzw. funktionsgleiche Teile stets mit denselben Bezugszeichen gekennzeichnet. Sofern bestimmte beschriebene und/oder aus den Zeichnungen entnehmbare Merkmale der erfindungsgemäßen Schlaucharmatur oder ihrer Bestandteile nur im Zusammenhang mit einem Ausführungsbeispiel beschrieben sind, sind diese aber auch gemäß der Erfindung unabhängig von diesem Ausführungsbeispiel als Einzelmerkmal oder aber auch in Kombination mit anderen Merkmalen des Ausführungsbeispiels wesentlich und werden als zur Erfindung gehörig beansprucht.

In Fig. 1a ist eine Schlaucharmatur als SAE-Armatur dargestellt, wie sie bekannt ist und einleitend beschrieben wurde. Diese besteht aus einem Anschlussblock 1, der an ein anzuschließendes Gerät, z. B. einem Bagger oder dergleichen, befestigt wird. Bei diesem Anschlussblock 1 handelt es sich um eine SAE-Armatur für 1 ¼ Zoll. Dieser Anschlussblock 1 besitzt eine mittige Strömungseintrittsöffnung 2 mit einem Durchmesser d2 und vier beidseitige, der Strömungseintrittsöffnung 2 klappsymmetrisch zu seinen beiden durch die Mitte der Eintrittsöffnung 2 verlaufende Mittelachsen X-Y angeordnete Befestigungslöcher 3. Der Durchmesser d₂ der Eintrittsöffnung 2 beträgt in diesem Beispiel 30 mm. Der mittlere Lochabstand a₁ der Befestigungslöcher 3 senkrecht zur X-Achse beträgt 66,6 mm und der mittlere Lochabstand a₂ senkrecht zur Y-Achse beträgt 31,8 mm. An den Anschlussblock 1 wird eine SAE-Kopfarmatur 4 mittels nicht eingezeichneter Schrauben, die in die Befestigungslöcher 3 eingeschraubt werden, an dem Anschlussblock 1 befestigt. Die SAE-Kopfarmatur 4 besteht aus einem Rohrstutzen 6 mit einem einendigen Anschlusskopf 7. Auf dem Anschlusskopf 7, der im dargestellten Ausführungsbeispiel als SAE-Kopf ausgebildet ist, ist ein Vollflansch 8 aufgeschoben. An den Anschlusskopf 7 schließt sich einstückig der Rohrstutzen 6 an. Der Vollflansch 8 weist vier äußere, symmetrisch angeordnete Schraubenlöcher auf, die durch die Mittellinien z angedeutet sind, sowie eine mittige Durchgangsöffnung 9. Mit der Durchgangsöffnung 9 sitzt der Vollflansch 8 auf dem Anschlusskopf 7. Der Anschlusskopf 7 ist zumindest teilweise an seinem Umfang kegelstumpfförmig ausgebildet. Bei dem in Fig. 1 a dargestellten Ausführungsbeispiel des Standes der Technik schließt sich an eine größere Kegelstumpfendfläche 11 des Anschlusskopfes 7 eine kreiszylindrischer Ringbund 12 an, dessen Durchmesser d4 größer ist als der Durchmesser d5 der größeren Kegelstumpfendfläche 11. Der Ringbund 12 weist in seiner Stirnfläche 13 eine Ringnut 14 auf, in der ein nicht dargestellter O-Dichtring einsetzbar ist. Der Anschlusskopf 7 weist in seinem kegelstumpfförmigen Abschnitt 16 einen Steigungswinkel von vorzugsweise 15 ° auf. Weiterhin weist der Vollflansch 8 innerhalb seiner Durchgangsöffnung 9 zwei Öffnungsabschnitte auf, und zwar einen ersten kegelstumpfförmigen Öffnungsabschnitt 17, der an den kegelstumpfförmigen Abschnitt 16 des Anschlusskopfes 7 in Bezug auf seinen Steigungswinkel und seine Abmessungen angepasst ist, und einen zweiten kreiszylindrischen Öffnungsabschnitt 18, der den Rohrstutzen 6 mit radialem Spiel umschließt und an dessen Außendurchmesser mit seinem Innendurchmesser angepasst ist. Bei der dargestellten Ausbildung der SAE-Kopfarmatur für die Nennweite 32 des Standes der Technik beträgt der Durchmesser d₄ des Ringbundes 12 an seiner Stirnfläche 57,5 mm und der Durchmesser d₅ der größeren Kegelstumpfendfläche beträgt 53,5 mm. Der Durchmesser d₆ der kleineren Kegelstumpfendfläche beträgt 43,7 mm. Die Breite b₁ des Ringbundes 12 beträgt bei dieser Ausführungsform 11 mm.

Der Rohrstutzen 6 und der Anschlusskopf 7 besitzen einen gemeinsamen mittigen Fluidkanal 19. Der Fluidkanal 19 weist eine Einströmöffnung 21 auf, mit einem Durchmesser d₁ von 24 mm, wobei der Durchmesser der Einströmöffnung auch der Durchmesser des Fluidkanals 19 über seine gesamte Länge ist. Zweckmäßigerweise ist jedoch vorgesehen, dass in der Stirnfläche 13 des Ringbundes bzw. der Stirnfläche 13 des Anschlusskopfes 7 eine Ausströmöffnung 22 ausgebildet ist, deren Durchmesser d3 größer ist als der Durchmesser d1 des Fluidkanals 19 bzw. dessen Einströmöffnung 21. Hierdurch ergibt sich eine konische Erweiterung 23 am Ende des Fluidkanals 19. Der Rohrstutzen 6 besitzt entsprechend der Nennweite NW 32 an seinem freien Ende einen Anschlussabschnitt 24 mit einem Außendurchmesser D1 von 32 mm entsprechend der Nennweite NW 32. Die Ringnut 14 besitzt vorzugsweise eine Breite von 4,2 mm und der Außendurchmesser D2 der Ringnut 14 beträgt vorzugsweise 44,4 mm.

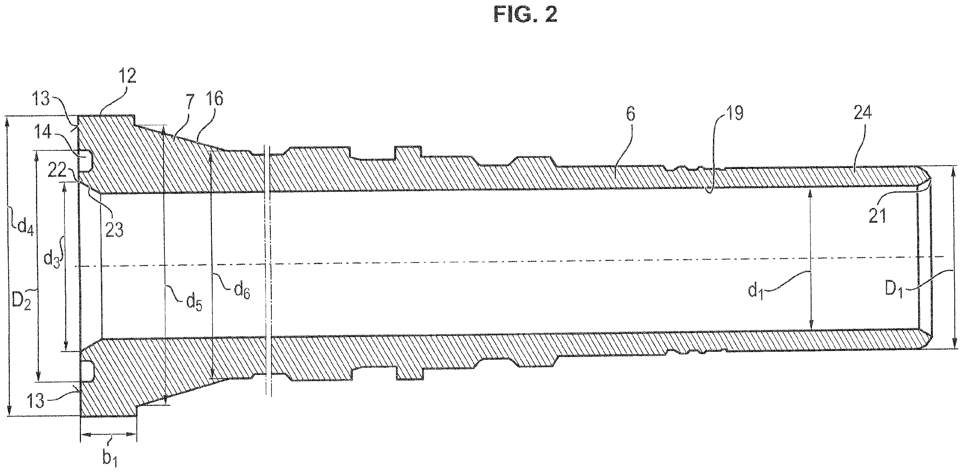

In Fig. 1b und 2 ist eine erfindungsgemäße Schlaucharmatur als SAE-Kopfarmatur dargestellt. Diese Kopfarmatur ist von ihrem Aufbau konstruktiv gleich ausgebildet wie die in Fig. 1a beschriebene Schlaucharmatur des Standes der Technik. Hierbei stimmt die verwendete einteilige SAE-Armatur mit dem Anschlussblock 1 in den Abmessungen und der Dimensionierung vollständig mit der bekannten SAE-Armatur der Nennweite NW 32 überein. Jedoch ist der Rohrstutzen 6 mit dem Anschlusskopf 7 sowie der Vollflansch 8 derart dimensioniert, dass der Rohrstutzen 6 einen Außendurchmesser D₁ von 36 mm im Bereich seines Anschlussabschnittes 25 entsprechend einer Nennweite NW 36 aufweist. Hierbei besitzt die Einströmöffnung 21 des Fluidkanals 19 den Durchmesser d₁ von 28 mm, und zwar entsprechend der Durchmesserbeziehung d₂:d₁ = 1,071, wobei d₂ der Durchmesser der Strömungseintrittsöffnung 2 ist. Weiterhin gilt erfindungsgemäß die Durchmesserbeziehung d₃:d₁ = 1,178, wobei d₃ der Durchmesser der Ausströmöffnung des Fluidkanals 19 ist, so dass d₃ = 33 mm beträgt. Weiterhin gilt das Durchmesserverhältnis d₄:d₁ = 2,053, wobei d₄ der Durchmesser der Stirnfläche 13 des Ringbundes bzw. des Anschlusskopfes 7 ist. Hierbei ergibt sich d₅ = 57,5 mm. Zudem gilt erfindungsgemäß folgende Durchmesserbeziehung: d₅:d₆ = 2,05, wobei d₅ der Außendurchmesser des Anschlusskopfes 7 an seiner größeren Kegelstumpfendfläche 11 ist und d₆ der Durchmesser an seiner kleineren Kegelstumpfendfläche. Hierbei gilt weiterhin die Durchmesserbeziehung d₆:d₁ = 1,56.

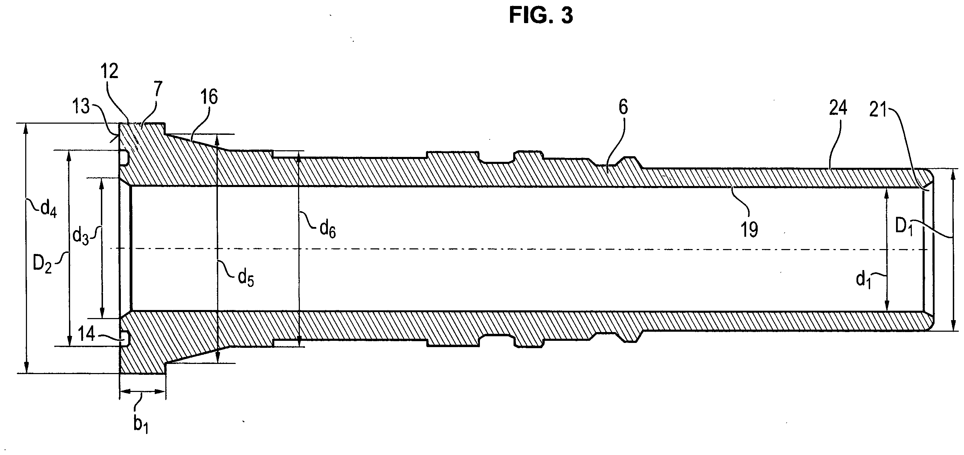

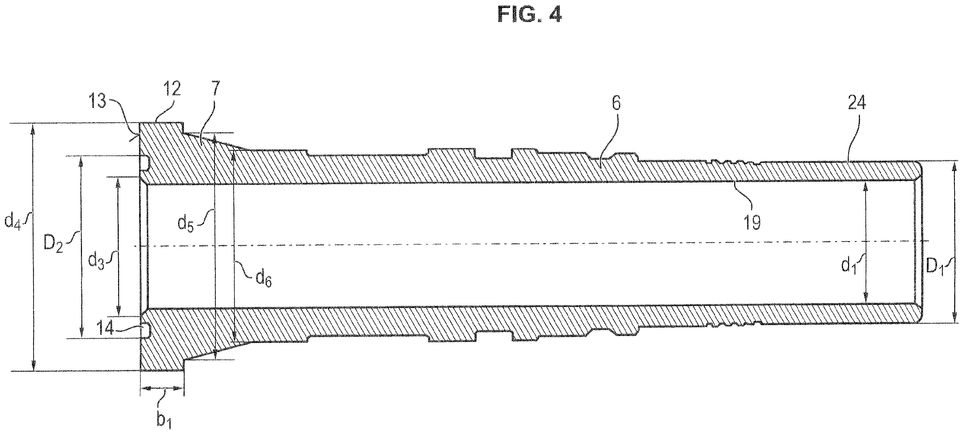

Durch die erfindungsgemäße Dimensionierung ergibt sich, dass unter Beibehaltung der Anschlussmaße einer einteiligen SAE-Armatur 1 ¼ Zoll für die Nennweite NW 32 der zulässige Betriebsdruck erhöht werden kann, wobei dies durch eine Vergrößerung auf eine Nennweite NW 36 erreicht wird. In den Fig. 3 und 4 sind erfindungsgemäße Kopfarmaturen für die erfindungsgemäßen Nennweiten NW 45 und NW 57 dargestellt. Hierbei entsprechen diese erfindungsgemäßen Kopfarmaturen, was den konstruktiven Aufbau betrifft, der erfindungsgemäßen Armatur gemäß den Fig. 1b und 2, wobei jedoch sich an die Nennweiten NW 45 und NW 57 angepasste Abmessungen ergeben. Diese erfindungsgemäßen Armaturen für die Nennweiten NW 45 und NW 57 werden verwendet für den Anschluss an Anschlussblöcke 1, wie sie für Schlaucharmaturen bzw. Kopfarmaturen der Nennweiten NW 40 bzw. NW 50 des Standes der Technik verwendet werden.

Die erfindungsgemäßen Abmessungen der erfindungsgemäßen Schlaucharmaturen für die Nennweiten NW 36, NW 45 und NW 57 im Vergleich zu den Abmessungen der Kopfarmaturen für die Nennweiten NW 32, NW 40 und NW 50 ergeben sich aus der nachfolgenden Tabelle.

| | NW 32 | NW 36 | NW 40 | NW 45 | NW 50 | NW 57 |
|---|---|---|---|---|---|---|
| d₁ | 24 | 28 | 29 | 36 | 40 | 46 |
| d₂ | 30 | 30 | 38 | 38 | 50 | 50 |
| d₃ | 33 | 33 | | 39 | 50 | 50 |
| d₄ | 57,5 | 57,5 | 68,5 | 68,5 | 83,5 | 83,5 |
| d₅ | | 53,5 | | 63,5 | | 77,5 |
| d₆ | | 43,7 | | 54 | | 66 |
| D₁ | | 36 | | 45 | | 57 |
| D₂ | 44,4 | 44,4 | | 53,7 | 63,2 | 63,2 |
| a₁ | 66,6 | 66,6 | 79,3 | 79,3 | 96,8 | 96,8 |
| a₂ | 31,8 | 31,8 | 36,5 | 36,5 | 44,5 | 44,5 |
| b₁ | 11 | 11 | 13 | 13 | 14 | 14 |
| P | | | | | | |

Der Betriebsdruck bei den Nennweiten NW 36, NW 45 und NW 57 beträgt 420 bar bzw. 6000 Psi.

Für die erfindungsgemäßen Nennweiten NW 36, NW 45 und NW 57 steigt das Durchmesserverhältnis d₂:d₁ von 1,07 bis 1,08 an, und das Durchmesserverhältnis d₃:d₁ nimmt von 1,178 bis 1,087 ab, mit ansteigendem Nennwert von NW 36 auf NW 57. Hierbei nimmt das Durchmesserverhältnis d₄:d₁ ebenfalls mit ansteigendem Öffnungsdurchmesser d₂ bzw. ansteigender Nennweite NW 36 auf NW 57 ab, und auch die Durchmesserverhältnisse d₅:d₆ bzw. d₆:d₁ nehmen von 1,224 bis 1,174 bzw. 1,56 bis 1,434 ab.

### Bezugszeichenliste:

- 1: Anschlussblock
- 2: Strömungseintrittsöffnung
- 3: Befestigungslöcher
- 4: SAE-Kopfarmatur
- 6: Rohrstutzen
- 7: Anschlusskopf
- 8: Vollflansch
- 9: Durchgangsöffnung
- 11: Kegelstumpfendfläche
- 12: Ringbund
- 13: Stirnfläche
- 14: Ringnut
- 16: kegelstumpfförmiger Abschnitt
- 17: kegelstumpfförmiger Öffnungsabschnitt
- 18: kreiszylindrischer Öffnungsabschnitt
- 19: Fluidkanal
- 21: Einströmöffnung
- 23: konische Erweiterung
- 24: Anschlussabschnitt
- 25: Anschlussabschnitt

## Patentansprüche

1. Vorrichtung aufweisend eine einteilige SAE-Armatur mit einem Anschlussblock (1) und eine SAE-Kopfarmatur für Höchstdruckschläuche, die SAE-Kopfarmatur bestehend aus einem Rohrstutzen (6) zur Verbindung mit einem Höchstdruckschlauch sowie aus einem einendigen Anschlusskopf (7) verbunden mit der einteiligen SAE-Armatur mit dem Anschlussblock (1) sowie aus einem auf dem Anschlusskopf (7) verschiebbar gelagerten einteiligen Vollflansch (8), wobei der Anschlusskopf (7) einen zumindest teilweise an seinem Umfang kegelstumpfförmig ausgebildeten Abschnitt (16) mit einer größeren Kegelstumpfendfläche (16a) und einer kleineren Kegelstumpfendfläche (16b) aufweist, wobei seine kleinere Kegelstumpfendfläche (16b) einen Übergang zum Rohrstutzen (6) bildet, und der Vollflansch (8) eine Durchgangsöffnung (9) besitzt, die zumindest teilweise ein an den kegelstumpfförmigen Abschnitt (16) des Anschlusskopfes (7) angepasstes kegelstumpfförmiges Negativprofil aufweist, wobei durch den Rohrstutzen (6) und den Anschlusskopf (7) ein im Querschnitt kreisförmiger Fluidkanal (19) mit einem Fluidkanaldurchmesser (d₁), einer Einströmöffnung (21) am freien Ende des Rohrstutzens (6) und einer Ausströmöffnung (22) im Bereich einer am Anschlusskopf (7) angeordneten Stirnfläche (13) verläuft,
**dadurch gekennzeichnet, dass** für die Verbindung der SAE-Kopfarmatur mit dem Anschlussblock (1) mit einer Strömungseintrittsöffnung (2) mit einem Öffnungsdurchmesser (d₂) von 30 mm, 38 mm oder 50 mm , der Öffnungsdurchmesser (d₂) dem Fluidkanaldurchmesser (d₁) gemäß folgender Tabelle zugeordnet ist:
| Öffnungsdurchmesser (d₂) [mm] | Fluidkanaldurchmesser (d₁) [mm] |
|---|---|
| 30 | 28 |
| 38 | 36 |
| 50 | 46 |

2. Vorrichtung nach Anspruch 1,
**dadurch gekennzeichnet, dass** der Anschlusskopf (7) als SAE-Anschlusskopf ausgebildet ist, wobei die Strömungseintrittsöffnung (2) des Anschlussblocks (1) und der Fluidkanal (19) des Anschlusskopfes (7) in einem miteinander verbundenen Zustand fluchten.

3. Vorrichtung nach Anspruch 1 oder 2,
**dadurch gekennzeichnet, dass** der Ausströmungsdurchmesser (d3) der Ausströmungsöffnung (22) des Fluidkanals (19) dem Fluidkanaldurchmesser (d1) gemäß folgender Tabelle zugeordnet ist:
| Fluidkanaldurchmesser (d1) [mm] | Ausströmungsdurchmesser (d3) [mm] |
|---|---|
| 28 | 33 |
| 36 | 39 |
| 46 | 50 |

4. Vorrichtung nach Anspruch 1 bis 3,
**dadurch gekennzeichnet, dass** das Durchmesserverhältnis (d₄):(d₁) mit ansteigendem Öffnungsdurchmesser (d₂) der Strömungseintrittsöffnung (2) von 2,05 bis 1,81 abnimmt, wobei (d₄) der Durchmesser der Stirnfläche des Anschlusskopfes (7) bzw. der Stirnfläche (13) des Ringbundes (12) ist.

5. Vorrichtung nach einem der Ansprüche 1 bis 4,
**dadurch gekennzeichnet, dass** das Durchmesserverhältnis (d₅):(d₆) mit ansteigendem Durchmesser (d₂) der Strömungseintrittsöffnung (2) von 1,224 bis 1,174 abnimmt, bei einem, Konuswinkel von 15 °, wobei (d₅) der Durchmesser der größeren Kegelstumpfendfläche (16a) ist und (d₆) der Durchmesser des Anschlusskopfes (7) an seiner kleineren Kegelstumpfendfläche (16b) ist.

6. Vorrichtung nach einem der Anspruche 1 bis 5,
**dadurch gekennzeichnet, dass** das Durchmesserverhältnis (d₆):(d₁) von 1,56 bis 1,434 mit ansteigendem Durchmesser (d₂) der Strömungseintrittsöffnung (2) abnimmt, wobei (d₆) der Durchmesser des Anschlusskopfes (7) im Bereich der kleineren Kegelstumpfendfläche (16b) ist und (d₁) der Durchmesser des Fluidkanals (19) ist.

7. Vorrichtung nach einem der Ansprüche 4 bis 6, **dadurch gekennzeichnet, dass** die größere Kegelstumpffläche (16a) eine sich an diese anschließende Anzugsbegrenzung in Form eines durch eine Durchmesservergrößerung gebildeten Ringbundes (12) aufweist und die Ausströmöffnung (22) im Bereich der Stirnfläche (13) des Ringbundes (12) verläuft.

## Claims

1. Device having a single-piece SAE fitting with a connection block (1) and having an SAE head fitting for very-high-pressure hoses, the SAE head fitting comprising a tubular socket (6) for connection to a very-high-pressure hose and comprising a connection head (7) at one end, connected to the single-piece SAE fitting with the connection block (1), and further comprising a single-piece full flange (8), which is mounted in a displaceable manner on the connection head (7), wherein the connection head (7) has a portion (16) which is in the form of a truncated cone over at least part of its circumference and has a larger truncated-cone end surface (16a) and a smaller truncated-cone end surface (16b), wherein its smaller truncated -cone end surface (16b) forms a transition to the tubular socket (6), and the full flange (8) has a through-passage opening (9) which, at least in part, has a truncated-cone-shaped negative profile adapted to the truncated-cone-shaped portion (16) of the connection head (7), wherein a cross-sectionally circular fluid channel (19) runs through the tubular socket (6) and the connection head (7) and has a fluid-channel diameter (d₁), an inflow opening (21) at the free end of the tubular socket (6) and an outflow opening (22) in the region of an end surface (13) arranged on the connection head (7), **characterized in that**, for the connection of the SAE head fitting to the connection block (1) having a flow-entry opening (2) with an opening diameter (d₂) of 30 mm, 38 mm or 50 mm, the opening diameter (d₂) is associated with the fluid-channel diameter (d₁) in accordance with the following table:
| Opening diameter (d₂) [mm] | Fluid-channel diameter (d₁) [mm] |
|---|---|
| 30 | 28 |
| 38 | 36 |
| 50 | 46 |

2. Device according to Claim 1,
**characterized in that** the connection head (7) is designed in the form of an SAE connection head, wherein the flow-entry opening (2) of the connection block (1) and the fluid channel (19) of the connection head (7) are in alignment when in a connected-together state.

3. Device according to Claim 1 or 2,
**characterized in that** the outflow diameter (d₃) of the outflow opening (22) of the fluid channel (19) is associated with the fluid-channel diameter (d₁) in accordance with the following table:
| Fluid-channel diameter (d₁) [mm] | Outflow diameter (d₃) [mm] |
|---|---|
| 28 | 33 |
| 36 | 39 |
| 46 | 50 |

4. Device according to Claims 1 to 3,
**characterized in that** the diameter ratio (d₄) : (d₁) decreases from 2.05 to 1.81 as the opening diameter (d₂) of the flow-entry opening (2) increases, where (d₄) is the diameter of the end surface of the connection head (7) or of the end surface (13) of the annular collar (12).

5. Device according to one of Claims 1 to 4,
**characterized in that** the diameter ratio (d₅) : (d₆) decreases from 1.224 to 1.174, at a cone angle of 15°, as the diameter (d₂) of the flow-entry opening (2) increases, where (d₅) is the diameter of the relatively large truncated-cone end surface (16a) and (d₆) is the diameter of the connection head (7) on its smaller truncated-cone end surface (16b).

6. Device according to one of Claims 1 to 5,
**characterized in that** the diameter ratio (d₆) : (d₁) decreases from 1.56 to 1.434 as the diameter (d₂) of the flow-entry opening (2) increases, where (d₆) is the diameter of the connection head (7) in the region of the smaller truncated-cone end surface (16b) and (d₁) is the diameter of the fluid channel (19).

7. Device according to one of Claims 4 to 6,
**characterized in that** the larger truncated-cone surface (16a) has an adjoining tightening-limitation in the form of an annular collar (12), which is formed by an increase in diameter, and the outflow opening (22) runs in the region of the end surface (13) of the annular collar (12).

## Revendications

1. Dispositif présentant une armature de tête SAE d'une seule pièce comprenant un bloc de raccordement (1) et une armature de tête SAE pour des tuyaux à très haute pression, l'armature de tête SAE se composant d'un raccord de tuyau (6) pour le raccordement à un tuyau à très haute pression ainsi que d'une tête de raccordement à une extrémité (7) connectée à l'armature SAE d'une seule pièce avec le bloc de raccordement (1) ainsi que d'une bride massive (8) d'une seule pièce supportée de manière déplaçable sur la tête de raccordement (7), la tête de raccordement (7) présentant une portion (16) réalisée au moins en partie au niveau de sa périphérie sous forme tronconique avec une plus grande surface d'extrémité tronconique (16a) et une plus petite surface d'extrémité tronconique (16b), sa plus petite surface d'extrémité tronconique (16b) formant une transition au raccord de tuyau (6), et la bride massive (8) possédant une ouverture de passage (9) qui présente au moins en partie un profil négatif de forme tronconique adapté à la portion de forme tronconique (16) de la tête de raccordement (7), un canal fluidique (19) de forme circulaire en section transversale avec un diamètre de canal fluidique (d₁), une ouverture d'afflux (21) à l'extrémité libre du raccord de tuyau (6) et une ouverture de sortie (22) dans la région d'une surface frontale (13) disposée au niveau de la tête de raccordement (7) s'étendant à travers le raccord de tuyau (6) et la tête de raccordement (7),
**caractérisé en ce que** pour la connexion de l'armature de tête SAE avec le bloc de raccordement (1) à une ouverture d'entrée d'écoulement (2) ayant un diamètre d'ouverture (d₂) de 30 mm, 38 mm ou 50 mm, le diamètre d'ouverture (d₂) est associé au diamètre du canal fluidique (d₁) conformément au tableau suivait :
| Diamètre d'ouverture (d₂) [mm] | Diamètre du canal fluidique (d₁) [mm] |
|---|---|
| 30 | 28 |
| 38 | 36 |
| 50 | 46 |

2. Dispositif selon la revendication 1,
**caractérisé en ce que** la tête de raccordement (7) est réalisée sous forme de tête de raccordement SAE, l'ouverture d'entrée d'écoulement (2) du bloc de raccordement (1) et le canal fluidique (19) de la tête de raccordement (7) étant alignés dans un état connecté l'un à l'autre.

3. Dispositif selon la revendication 1 ou 2,
**caractérisé en ce que** le diamètre d'écoulement (d₃) de l'ouverture d'écoulement (22) du canal fluidique (19) est associé au diamètre du canal fluidique (d₁) conformément au tableau suivant :
| Diamètre du canal fluidique (d₁) [mm] | Diamètre d'écoulement (d₃) [mm] |
|---|---|
| 28 | 33 |
| 36 | 39 |
| 46 | 50 |

4. Dispositif selon les revendications 1 à 3, **caractérisé en ce que** le rapport de diamètres (d₄) : (d₁) diminue avec l'augmentation du diamètre d'ouverture (d₂) de l'ouverture d'entrée d'écoulement (2) de 2,05 à 1,81, (d₄) étant le diamètre de la surface frontale de la tête de raccordement (7) ou de la surface frontale (13) de l'épaulement annulaire (12).

5. Dispositif selon l'une quelconque des revendications 1 à 4,
**caractérisé en ce que** le rapport de diamètres (d₅) : (d₆) diminue avec l'augmentation du diamètre (d₂) de l'ouverture d'entrée d'écoulement (2) de 1,224 à 1,174, pour un angle de conicité de 15°, (d₅) étant le diamètre de la surface d'extrémité tronconique plus grande (16a) et (d₆) étant le diamètre de la tête de raccordement (7) au niveau de sa surface d'extrémité tronconique plus petite (16b).

6. Dispositif selon l'une quelconque des revendications 1 à 5,
**caractérisé en ce que** le rapport de diamètres (d₆) : (d₁) diminue de 1,56 à 1, 434 avec l'augmentation du diamètre (d₂) de l'ouverture d'entrée d'écoulement (2), (d₆) étant le diamètre de la tête raccordement (7) dans la région de la plus petite surface d'extrémité tronconique (16b) et (d₁) étant le diamètre du canal fluidique (19).

7. Dispositif selon l'une quelconque des revendications 4 à 6,
**caractérisé en ce que** la plus grande surface tronconique (16a) présente une limitation de serrage se raccordant à celle-ci sous la forme d'un épaulement annulaire (12) formé par une augmentation de diamètre et l'ouverture de sortie (22) s'étendant dans la région de la surface frontale (13) de l'épaulement annulaire (12).
